# EUROPEAN PATENT SPECIFICATION

(11) **EP 0 682 195 B1**
(45) Date of publication and mention of the grant of the patent: **12.01.2000**
(21) Application number: 95303043.4
(22) Date of filing: 03.05.1995
(51) Int. Cl.: F16H 55/54, F16H 9/10

(54) **Transmission**
Getriebe
Transmission

(30) Priority: 12.05.1994 JP 9852094
(43) Date of publication of application: 15.11.1995
(73) Proprietor: MATSUSHITA ELECTRIC INDUSTRIAL CO., LTD., Kadoma-shi, Osaka-fu, 571 (JP)
(72) Inventor: Matsuda, Yutaka, Miyayama-cho, Toyonaka-shi, Osaka, 560 (JP); Shimizu, Kaoru, Osaka-shi, Osaka, 535 (JP)
(74) Representative: Crawford, Andrew Birkby

(56) References cited:
- DE-A- 3 137 018
- FR-A- 2 095 781
- FR-A- 2 694 060
- US-A- 4 498 351

## Description

### BACKGROUND OF THE INVENTION

### (1)Field of the Invention

The present invention relates to a transmission providing with pulleys which outer diameters vary.

### (2)Description of the Prior Art

In agriculture machines and vihicles with combustion engines, bicycles or various kinds of machines, transmissions which can select the number of revolutions of the output shafts by step or continuous (stepless) transmissions are used.

As a continuous transmission, a construction with a pulley which the outer diameter varies by that slide parts dividing a band wheel are put in a guide wheel with gutters disposed radially and the slide parts and guide blocks sliding on a rotary shaft are linked by a link rod is proposed in Japanese Patent Laid-Open Application 63-145860 and another construction which moves one of slide plates included in a V pulley is proposed in Japanese Utility Model 2-54947.

As a variable outer diameter roller using fluid such as compressed air, for example, Japanese Patent Laid-Open Application 3-20420 and Japanese Patent Laid-Open Application 3-259843 propose a roller which outer diameter is varied by supplying fluid such as gas to a pressure chamber (including a combination of a plurality of pressure chambers) which is made of tubular elastics and fixed to a rotary axle and expanding the tubular elastcs.

In Japanese Patent Laid-Open Application 63-145860 using the above-mentioned variable outer diameter pulley, however, link mechanism and slide parts with divided band wheels are used and the construction is complex and a number of parts are used.

Also in Japanese Utility Model 2-54947, the transmission mechanism is complex, its capacity is big and it requires big assembly man-hour and cost.

Each of FR-A-2095781, FR-A-2694060 and US-A-4,498,351 discloses a transmission system comprising a pair of variable outer diameter pulleys. Each pulley comprises a plurality of sliders which may be radially moved by the application of fluid pressure to increase or decrease the outer diameter of the pulley.

### SUMMARY OF THE INVENTION

The present invention provides a transmission comprising:
a pair of pulleys; and
power transmission means for transmitting power between said pair of pulleys; wherein
one or each of said pulleys is a variable outer diameter pulley which comprises:
a pipe section having a plurality of penetrating holes disposed radially around the side wall of said pipe section; and
a plurality of sliders disposed in respective ones of said penetrating holes and forming a pulley peripheral face;
and wherein said sliders are arranged to be moved by fluid supplied through a fluid supply passage in a direction so that the outer diameter of the pulley enlarges;
characterised in that the or each variable outer diameter pulley further comprises sealing means comprising diaphragm means corresponding to each of said plurality of holes and said sealing means and pipe section are held in an air-tight relationship between side plates provided at the ends of said pipe section.

As power transmission means, various kinds of belts, for example a round belt, a flat belt, a V belt, a timing belt, or a chain is used. The variable outer diameter pulley fixes sealing parts providing pot-shaped elastic diaphragms corresponding to each penetrating hole inside a pipe disposing a plurality of penetrating holes in the cylindrical wall of the pipe. Sliders forming a pulley peripheral face fit into each one of penetrating holes to be able to slide smoothly and the sealing parts and the pipe are held in air-tight relation between side plates at both ends of the pipe and a rotary axle providing a connecting hole for supplying fluid to push the diaphragms. The sliders are pushed and moved to the direction that the outer diameter of the pulley expands by fluid supplied from a rotary coupling connected to the rotary axle.

The pot-shaped diaphragms attached inside the air-tight pipe deform to flat plates by fluid supplied from the connecting hole of the rotary axle. At the same time, the sliders fitted into the pot-shaped diaphragms through the penetrating holes in the pipe wall are pushed outside the pipe. As a result, the peripheral parts being radially attached on the tops of the sliders and forming a pulley peripheral face move towards outside by a designated distance and the pulley obtains a desired (enlarged) outer diameter size. The side plates restrict the moving range (upper dead point) of the sliders.

When the variable outer diameter pulley exhausts the fluid inside the pipe, the sliders restore to the original positions in the diaphragms by a tension coil spring or a rubber ring inserted in the gutters of the pulley peripheral parts. As a result, the peripheral parts of the tops of the sliders restore to the initial positions and the pulley becomes an initial (small) outer diameter.

A variable outer diameter pulley used in a transmission in accordance with an exemplary embodiment of the present invention has a very simple construction and any excess tension does not apply to the diaphragms. Only a little compression and bending distortion occur when the diaphragms deform from a pot-shape to a flat plate shape. The maximum outer diameter size of the pulley formed by the sliders is always constant independent of fluid pressure applied to the diaphragms, because the movable range of the sliders is restricted by the side plates.

Furthermore, it is possible to use any one of a round belt, a flat belt, a timing belt, a chain, etc. as well as a V belt as power transmission means.

### BRIEF DESCRIPTION OF THE DRAWINGS

FIG.1 illustrates a concept of a transmission in accordance with a first exemplary embodiment of the present invention.

FIG.2 is a cross sectional view of a variable outer diameter pulley used in a transmission taken along line SO-SO of FIG.1.

FIG.3 is a cross sectional view of a variable outer diameter pulley taken along line S1-S1 of FIG.2.

FIG.4 is a cross sectional view of a variable outer diameter pulley shown in FIG.2, after compressed air is supplied to the pulley.

FIG.5 is a cross sectional view of a variable outer diameter pulley taken along line S2-S2 of FIG.4.

FIG.6 is an enlarged cross sectional view of a sealing part included in the variable outer diameter pulley shown in FIG.2.

FIG.7 is a cross sectional view of the sealing part shown in FIG.6.

FIG.8 is a side view of a slider included in a variable outer diameter pulley shown in FIG.2.

FIG.9 is a top plan view of the slider shown in FIG.8.

FIG. 10 illustrates a concept of a transmission in accordance with a second exemplary embodiment of the present invention.

FIG. 11 is a cross sectional view of a variable outer diameter pulley used in a transmission taken along line SO-SO of FIG.10.

FIG.12 is a cross sectional view of a variable outer diameter pulley taken along line S1-S1 of FIG.11.

### DETAILED DESCRIPTION OF THE INVENTION

### (First exemplary embodiment)

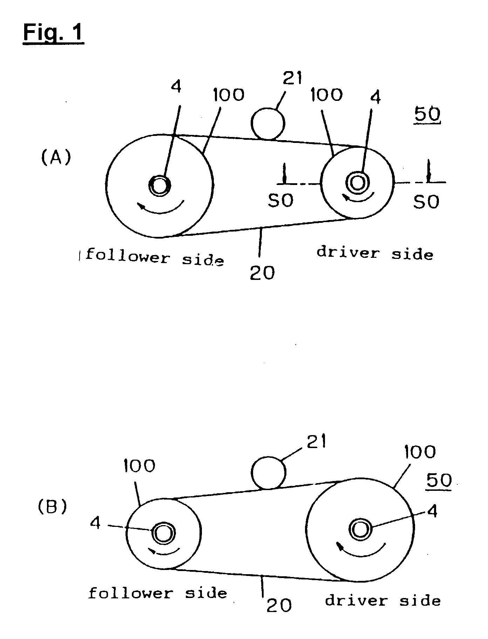

A concept of a transmission in accordance with a first exemplary embodiment of the present invention is illustrated in FIG.1.

A transmission 50 includes a pair of variable outer diameter pulleys 100 and a belt 20 as power transmission means. Each one of variable outer diameter pulleys is attached to axles 4 at a driver side and at a follower side. The axles 4 are located in parallel and supported at both ends by bearings such as ball bearings or cylindrical metals to be able to rotate. The axles 4 have hollow portions on their axes for supplying fluid to the inside of the pulleys 100.

The axle 4 of the driver side is rotated by an engine or a motor which is not shown in FIG.l. The rotation at the driver side is transmitted to the axle 4 at the follower side by power transmission means such as a belt 20 or a chain.

As a belt 20, any belt such as a round belt, a flat belt, a timing belt can be used as well as a V belt. FIG.1(A) illustrates a concept of a transmission in the state which a flat belt is tensed.

Each variable outer diameter pulley 100 at the driver side and the follower side can have two kinds of outer diameter sizes, a small diameter and a large diameter, as shown in FIG.l(A) and 1(B). Although there are four combinations of the outer diameter sizes, in the case in which both pulleys have the same size of diameter, the number of rotations of the pulley at the follower side is the same as that at the driver side and actually the pulley at the follower side is given with three kinds of the number of rotations. That is, the number of rotations of the axle 4 at the follower side can be switched in three steps in the transmission 50.

FIG.1(A) illustrates a state which the variable outer diameter pulley 100 at the follower side expands its outer diameter size by being supplied with fluid. The variable outer diameter pulley 100 at the driver side is not supplied with fluid and its outer diameter keeps an original small outer diameter.

FIG.1(B) illustrates a state which the variable outer diameter pulley 100 at the driver side expands its outer diameter size by being supplied with fluid, while the follower side keeps an original small outer diameter.

Switching the pulley outer diameter of the variable outer diameter pulley 100 is made automatically or manually using a fluid-controlled valve such as a solenoid valve or fluid mechanic element. The belt tension at each state is adjusted by means such as a tension roller 21 or a tension pulley.

Any fluid such as air, oil, etc. can be used. As an air supplier, for example, a power compressor combined with the transmission in one unit, an ordinary power compressor or a manual air pump provided separately from the transmission can be used.

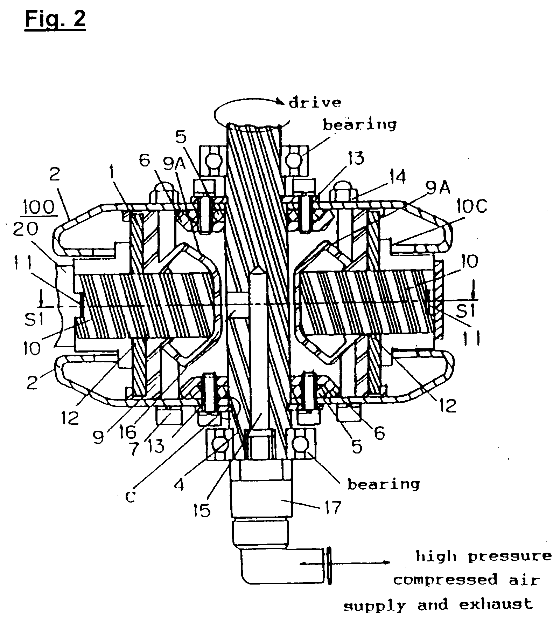

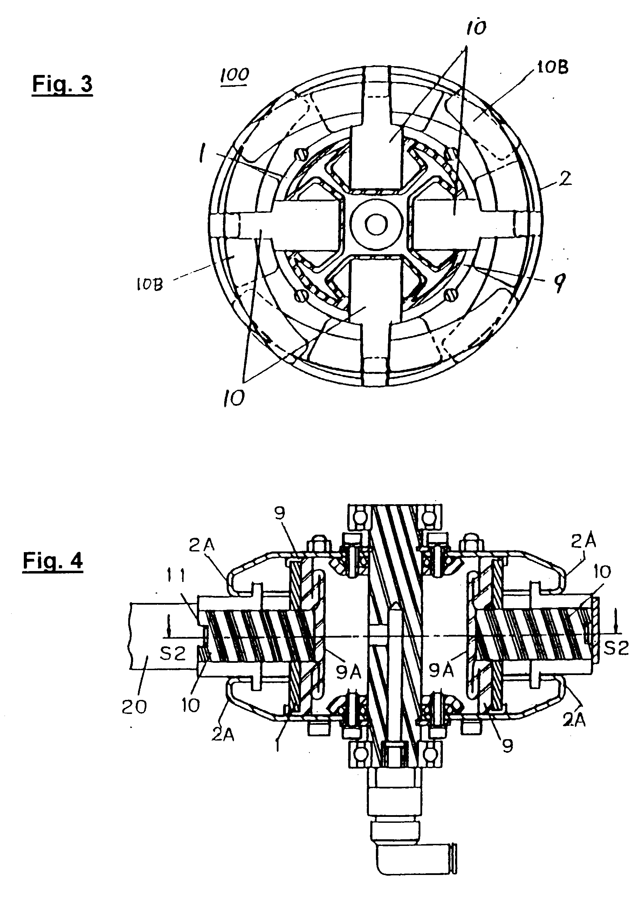

A variable outer diameter pulley 100 used in a transmission in accordance with the first exemplary embodiment of the present invention is shown in FIG.2 to FIG.9. FIGs.2 and 3 are cross sectional views of a variable outer diameter pulley 100 taken along line S0-S0 of FIG.1 and line S1-S1 of FIG.2, respectively.

A pipe 1 disposes a plurality of penetrating holes, for example four penetrating holes 12 spaced 90 degrees apart in the cylindrical wall of the pipe 1. The pipe 1 is made of hard material such as metal, epoxy resin, fiber reinforced plastic or polystyrene and is formed by a numerical controlled lathe of metal or injection molding of resin. The pipe 1 is caught between side plates 2 through a rim portion 9C of a sealing part 9. The side plates 2 are usually made by press work of a metal plate but they may be made by injection molding of resin.

The side plates 2 are held in air-tight relation to an axle 4 holding the pulley 100 along the axis of the pipe 1 by disk-shaped rubber packings 5, disc-shaped packing holders 6 and bolts 7.

Rectangular shaped anti-rotation plates 13 having generally semi-circular notches are put into the H-cut grooves at four locations (one each at upper and lower parts of the axle 4) as indicated by the letter C in FIG.2 and are fixed to the side plates 2 together with the disc-shaped packing holders 6 by the bolts 7.

A part of the disc-shaped rubber packing 5 is forced in the direction to cause the peripheral part of the central apperture to contact the axle 4 and according to the torque applied to the bolts 7, the rubber packings 5 make a sealing function between the axle 4 and the inside of the pipe 1. Accordingly, it is unnecessary to finish the surface of the axle 4 to a fine finish and sufficient sealing is effective even with a rough surface of the steel of the axle 4.

The side plates 2 and the pipe 1 are held in air tight relation by the bolts 7, nuts 14 and the rim portions 9C (upper and lower, in FIG.2) of the sealing part 9.

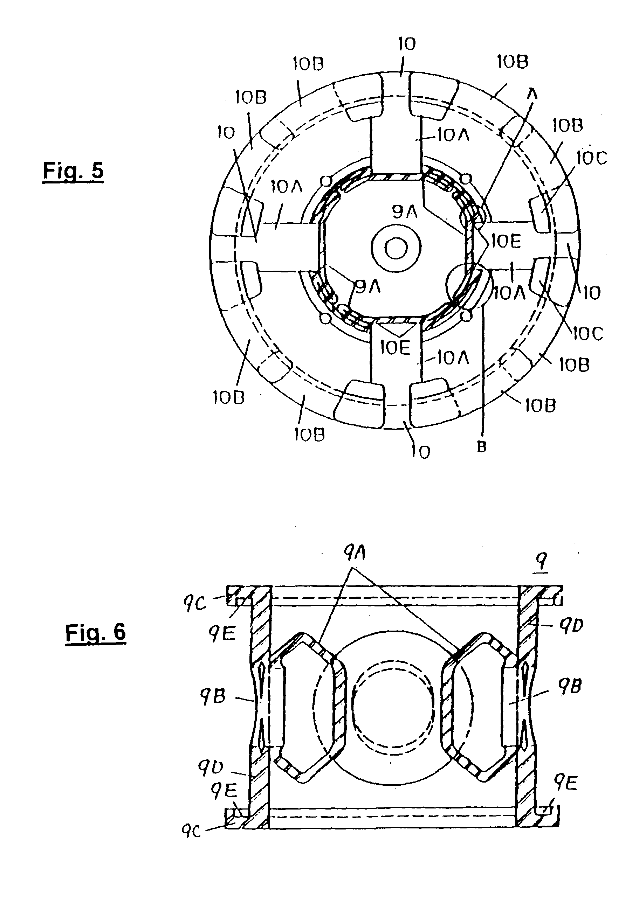

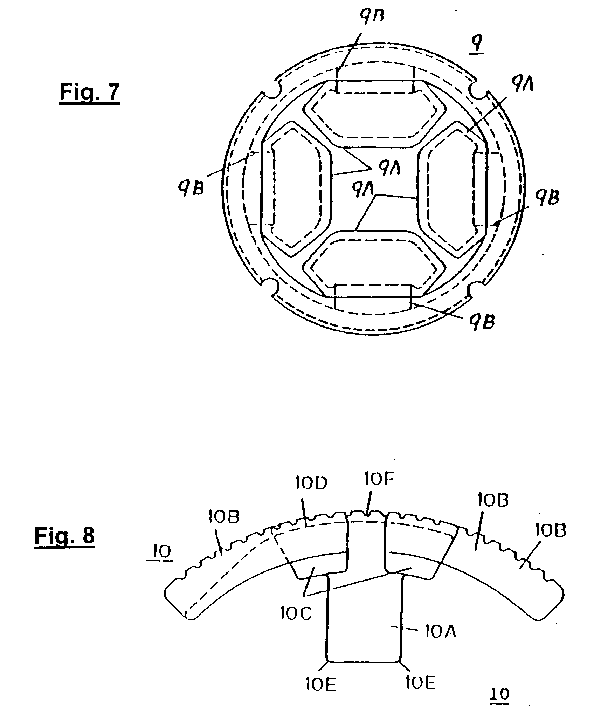

The sealing part 9 is formed by molding elastic material such as silicone rubber, rubber material such as butyl rubber or soft plastic in one unit as shown in FIGs.6 and 7. Molding in one unit can be by, for example, casting or injection molding.

The sealing part 9 is tightly fitted into the pipe 1. As shown in FIGs.6 and 7, the sealing part 9 is composed of a cylindrical trunk 9D, penetrating holes 9B, diaphragms 9A, rim portions 9C and circular grooves 9E.

The penetrating holes 9B are provided at four positions corresponding to each penetrating hole 12 provided on the cylindrical wall of the pipe 1 and supporting shafts 10A of sliders 10 fit the penetrating holes 12 to be able to slide smoothly. The diaphragms 9A are provided at four positions corresponding to each penetrating hole 12 provided on the cylindrical wall of the pipe 1 and form pot shapes protruding inside the cylindrical trunk 9D.

The circular grooves 9E and the rim portions 9C attached at both ends of the pipe 1 make tight sealing between the side plates 2 and the pipe 1 possible by the bolts 7 and the nuts 14. The shape of the diaphragm 9A can be any shape such as a bellow or a polyhedron instead of a pot-shape.

The penetrating holes 12 in the cylindrical wall of the pipe 1 which the supporting shafts 10A of the sliders 10 to move smoothly are tightly sealed by the diaphragms 9A of the sealing parts 9 as shown in FIG.2.

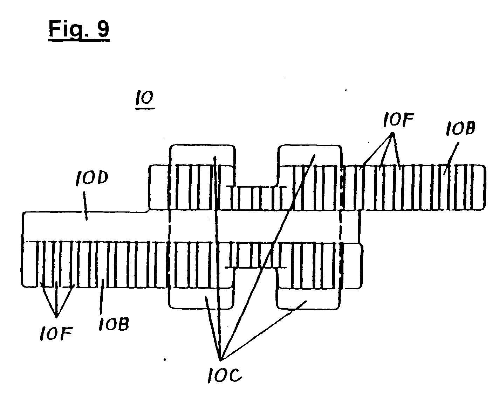

A side view and a top plan view of the slider 10 are shown in FIGs.8 and 9, respectively. The slider 10 is constructed so that a gutter 10D is between arc-shaped pulley peripheral parts 10B. The arc-shaped pulley peripheral parts 10B are at an end of the supporting shaft 10A and form a pulley peripheral face. The sliders 10 are molded in a desired shape with resin such as fiber reinforced plastic. They may be made by, for example machining metal, die casting or injection molding metals or resins.

The grooves 10F are provided at evenly spaced intervals to increase friction when contacting a flat belt or using a timing belt.

FIG.2 shows a variable outer diameter pulley which a flat belt is tensed. The cross section of the periphery of the pulley is drawn flat but it can be convex so that the belt does not slip out the pulley.

It can be concave or V-shaped for a round belt or a V belt, respectively. A cross sectional view of a variable outer diameter pulley 500 for a V belt is shown in FIG.15. A round belt can be used for the variable outer diameter pulley 500 with V-shaped grooves in its periphery. A plurality of V grooves can be provided in parallel instead of a single groove. A sprokect wheel can be used for a chain belt (not shown).

It is necessary to design the number of gears not to loosen the gear biting even in any state of small diameter and enlarged diameter, when a chain or a timing belt is used.

The sliders 10 are constructed so that the gutters 10D are put between the arc-shaped pulley peripheral parts 10B which are at an end of the supporting shafts 10A and form a pulley peripheral face. By providing the arc-shaped pulley peripheral parts with the shape as shown and with designated deviation, when the sliders 10 are radially disposed at four positios 90 degrees apart the structure can prevent mutual interference of the arc-shaped pulley peripheral parts 10B and form pulley peripheral parts 10B which are continuous when the outer diameter of the pulley enlarges.

The shape of the locations of the pulley peripheral parts 10B is not restricted to being symmetrical and they may be located like an alphabetical letter Y or S so that they become continuous.

One end of the slider 10 is a supporting shaft 10A having a circular cross section. Rubber rings 11 are disposed in the gutter 10D of the sliders 10. The rubber ring 11 has a function which is to push the sliders 10 (four pieces in the exemplary embodiment shown in FIG.2) simultaneously towards the axis of the axle 4 and to restore the sliders 10 to the original positions when the variable outer diameter pulley has a small diameter. In stead of the rubber ring 11 used to restore the sliders 10 to the original positions, means to give negative pressure to the diaphragms 9A, such as a ring-shaped tension coil spring connecting their starting point and ending point or any other means may be used.

Compressed air is supplied to the cylindrical trunk 9D of the sealing part 9 by a designated timing signal through a rotary air coupling 17, a fluid passage 15 along the axis of the axle 4 and a transverse connecting hole 16.

The diaphragms 9A of the sealing part 9 shown in FIG.4 and marked by B in FIG.5 are pushed by the compressed air, deform from a pot-shape to a flat plate-shape and push the supporting shafts 10A of the sliders 10 further out of the penetrating holes 12 of the pipe 1.

The end of the stroke of the sliders 10 pushed by the compressed air is a working limit (upper dead point) of the sliders 10 where the protruding parts 10C of the sliders 10 strike against the hook-shaped rim portions 2A of the C-shaped side plates 2.

The pulley peripheral parts 10B of the sliders 10 pushed outside the pipe 1 form a peripheral face having a desired larger outer diameter as shown in FIGs.4 and 5. At the same time, they expand the rubber ring 11 fixed in the gutters 10D of the sliders 10.

The pressure resistance of cylindrical elastics made of rubber is usually as small as about 2 kgf/cm .

In the present invention, compressed air of 2 to 5 kgf/cm can be supplied to the diaphragms 9A.

At pressures used to enlarge the pulley, the diaphragms 9A made of soft rubber deform to flat plates and are pushed into sharp edges or into small gaps. Repeated action on the diaphragm 9A causes the soft surface of the diaphragm 9A to peal off little by little and eventually its pressure resistance strength decreases and the diaphragm 9A will burst. In order to prevent explosion or cracking of the diaphragams 9A from repeated working under high pressure, the edge parts of the supporting shafts 10A are made with round corners 10E as shown in FIG.8.

Working with compressed air, the deformed portions of the diaphragms 9A are pushed to the inside wall of the cylindrical trunk 9D of the sealing part 9 and round corners 10E of the supporting shafts 10A, as shown in the circle A in FIG.5 to minimize bending distortion of the sealing part 9.

The diaphragms 9A constructed in accordance with the present invention could realize a working life over 2 million cycles under air pressure of more than 5kgf/cm .

When the compressed air pushing diaphragms 9A is exhausted through fluid passage 15 of the axle 4, the outer diameter of the variable outer diameter pulley 100 restores from an enlarged diameter to an original small diameter.

As the air pressure decreases inside the sealing part 9, the supporting shafts 10A are pushed inside the pipe 1 by the tension of the rubber ring 11 to restore the sliders 10 to their original positions as shown in FIGs.2 and 3. Then the periphral face (outer diameter) of the pulley peripheral part 10B becomes smaller than the outer diameter of the side plates 2.

In a state of a small outer diameter shown in FIG.3, the pulley peripheral parts 10B of the sliders 10 do not form a smooth circle. Uneven parts are made at the overlapped edge portions of the pulley peripheral parts 10B. This is because of obtaining a smooth circular peripheral face at an enlarged outer diameter state and even if it is as shown in FIG.3 usually no obstacle occurs in power transmission but if there is any trouble the uneven parts may be removed by chamfering the edge portions of the pulley peripheral parts 10B or reducing the overlapped portions. Instead of designing a smooth peripheral face at an enlarged outer diameter state, a smooth peripheral face at a small outer diameter state may be designed.

### (Second exemplary embodiment)

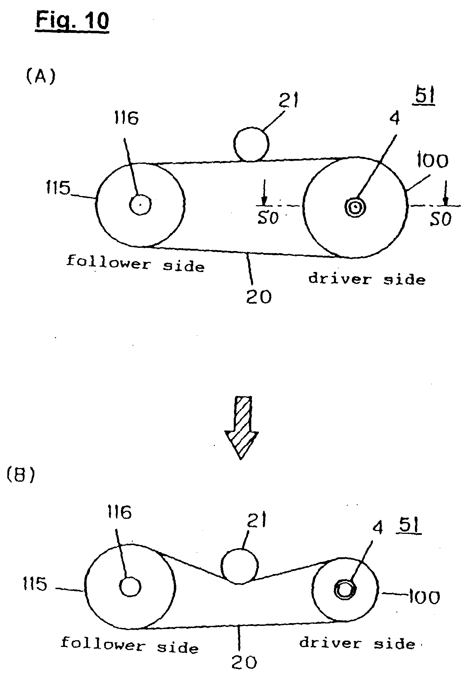

A concept of a transmission 51 in accordance with a second exemplary embodiment of the present invention is illustrated in FIG.10. A variable outer diameter pulley 100 is mounted only at a driver side and at a follower side a fixed outer diameter pulley 115 is mounted. Accordingly, the follower side has two kinds of number of revolutions. In this case, an axle 116 at the follower side may be any one of a solid shaft or a hollow shaft. A construction is also possible which a variable outer diameter pulley 100 is mounted at a follower side and at a driver side a fixed outer diameter pulley 115 is mounted.

FIG.10(A) illustrates a state which the variable outer diameter pulley 100 at the driver side is supplied with fluid and its outer diameter expands to a large size. FIG.10(B) illustrates a state which the variable outer diameter pulley 100 at the driver side is exhausted with fluid and its outer diameter shrinks to an original small size.

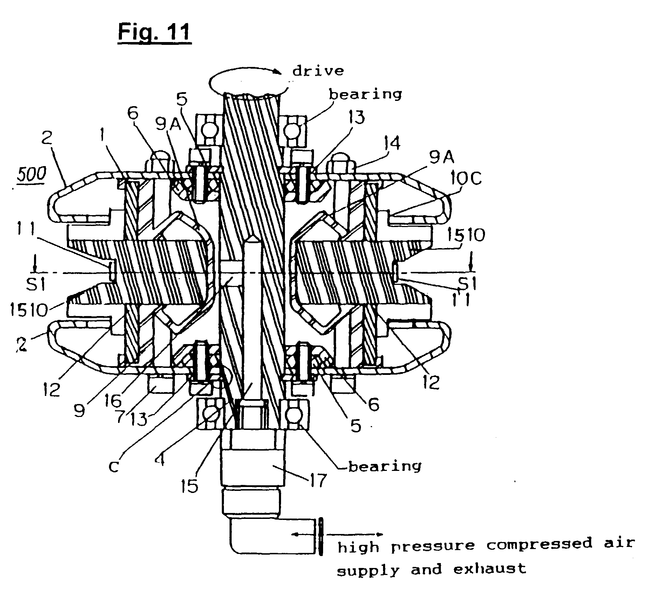

FIG.11 is a cross sectional view of a variable outer diameter pulley 500 taken along line S0-S0 of FIG.10 and shows a state which the pulley peripheral face forms a smooth and small outer diameter by exhausting fluid.

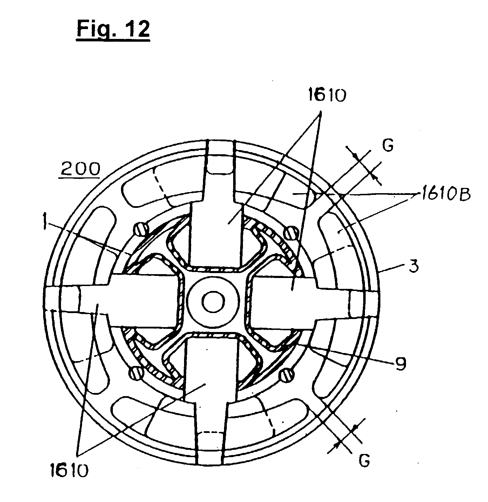

FIG.12 is a cross sectional view of the variable outer diameter pulley 500 taken along line S1-S1 of FIG.11. Gaps are provided between adjacent pulley peripheral parts 1610B of the sliders 1610. The gaps are exaggeratedly illustrated in FIG.12. In the state the outer diameter expands being supplied with fluid, the gaps between the adjacent pulley peripheral parts 1610B of the sliders 1610 enlarge further.

Any other variation than the above-mentioned structure of a variable outer diameter pulley disposing sliders spaced 90 degrees apart can be used.

Thus, a transmission with variable outer diameter pulleys which the outer diameter of the pulley expands by radially moving sliders is simple in construction and is superior in repeated fatigue. Any one of a flat belt, a round belt, a timing belt, a V belt, or a chain can be used as power transmission means.

## Claims

1. A transmission comprising:
a pair of pulleys (100); and
power transmission means (20) for transmitting power between said pair of pulleys; wherein
one or each of said pulleys is a variable outer diameter pulley which comprises:
a pipe section (1) having a plurality of penetrating holes disposed radially around the side wall of said pipe section; and
a plurality of sliders (10) disposed in respective ones of said penetrating holes and forming a pulley peripheral face;
and wherein said sliders are arranged to be moved by fluid supplied through a fluid supply passage in a direction so that the outer diameter of the pulley enlarges;
characterised in that the or each variable outer diameter pulley further comprises sealing means (9) comprising diaphragm means (9A) corresponding to each of said plurality of holes and said sealing means and pipe section are held in an air-tight relationship between side plates (2) provided at the ends of said pipe section.

2. A transmission as recited in claim 1, wherein each of said sliders comprises:
an arc part (10B) forming a pulley peripheral part with a designated angle for tensing a belt; and
a supporting shaft (10A) disposed in a respective one of said penetrating holes.

3. A transmission as recited in claim 2, wherein:
said belt is one of a round belt, a flat belt, a V belt and a timing belt.

4. A transmission as recited in claim 2, wherein each of said sliders comprises:
an arc part (10B) forming a pulley peripheral part with a designated angle for tensing a chain; and
a supporting shaft (10A) disposed in a respective one of said penetrating holes.

## Patentansprüche

1. Getriebe, das umfaßt:
ein Paar Riemenscheiben (100); und
eine Kraftübertragungseinrichtung (20), die Kraft zwischen dem Paar Riemenscheiben überträgt;
wobei eine oder beide der Riemenscheiben eine Riemenscheibe mit veränderlichem Außendurchmesser ist, die umfaßt:
einen Rohrabschnitt (1) mit einer Vielzahl von Durchgangslöchern, die radial um die Seitenwand des Rohrabschnitts herum angeordnet sind; und
eine Vielzahl von Gleitkörpern (10), die in entsprechenden der Durchgangslöcher angeordnet sind und eine Riemenscheiben-Umfangsfläche bilden;
und wobei sich die Gleitkörper durch über einen Fluidzuführkanal zugeführtes Fluid in einer Richtung bewegen, in der der Außendurchmesser der Riemenscheibe zunimmt;
**dadurch gekennzeichnet**, daß die bzw. jede Riemenscheibe mit veränderlichem Außendurchmesser des weiteren Abdichteinrichtungen (9) umfaßt, die Membraneinnchtungen (9A) umfassen, die jedem der Vielzahl von Löchern entsprechen, und die Abdichteinrichtungen und der Rohrabschnitt luftdicht zwischen Seitenplatten (20) gehalten werden, die an den Enden des Rohrabschnitts vorhanden sind.

2. Getriebe nach Anspruch 1, wobei jeder der Gleitkörper umfaßt:
ein Kreisbogenteil (10B), das ein Riemenscheiben-Umfangsteil mit einem vorgegebenen Winkel zum Spannen eines Riemens bildet; und
eine Tragewelle (10A), die in einem entsprechenden der Durchgangslöcher angeordnet ist.

3. Getriebe nach Anspruch 2, wobei:
der Riemen ein Rundriemen, ein Flachriemen, ein Keilriemen oder ein Zahnriemen ist.

4. Getriebe nach Anspruch 2, wobei jeder der Gleitkörper umfaßt:
ein Kreisbogenteil (10B), das ein Riemenscheiben-Umfangsteil mit einem vorgegebenen Winkel zum Spannen einer Kette bildet; und
eine Tragewelle (10A), die in einem entsprechenden der Durchgangslöcher angeordnet ist.

## Revendications

1. Transmission, comprenant :
une paire de poulies (100), et
un dispositif (20) de transmission de puissance destiné à transmettre une puissance entre les deux poulies, dans laquelle
l'une ou chacune des poulies est une poulie de diamètre externe variable qui comporte :
un tronçon de tube (1) ayant plusieurs trous de pénétration disposés radialement autour de la paroi latérale du tronçon de tube, et
plusieurs coulisseaux (10) placés dans des trous respectifs de pénétration et formant une face périphérique de poulie, et
les coulisseaux sont disposés afin qu'ils soient déplacés par un fluide transmis par un passage de transmission de fluide dans un sens tel que le diamètre externe de la poulie augmente,
caractérisée en ce que la poulie ou chaque poulie de diamètre externe variable comporte en outre un dispositif (9) d'étanchéité qui comporte des dispositifs à diaphragme (9A) correspondant à chacun des trous, et les dispositifs d'étanchéité et le tronçon de tube sont maintenus en coopération hermétique entre des plaques latérales (2) placées aux extrémités du tronçon de tube.

2. Transmission selon la revendication 1, dans laquelle chacun des coulisseaux comprend :
une partie (10B) en forme d'arc constituant une partie périphérique de poulie avec un angle désigné pour la tension d'une courroie, et
un arbre de support (10A) disposé dans un trou respectif parmi les trous de pénétration.

3. Transmission selon la revendication 2, dans laquelle :
la courroie est une courroie choisie parmi une courroie de section circulaire, une courroie plate, une courroie trapézoïdale et une courroie crantée.

4. Transmission selon la revendication 2, dans laquelle chacun des coulisseaux comprend :
une partie (10B) en forme d'arc constituant une partie périphérique de poulie ayant un angle désigné pour la tension d'une chaîne, et
un arbre de support (10A) disposé dans un trou respectif parmi les trous de pénétration.
